# EUROPEAN PATENT APPLICATION

(11) **EP 1 582 743 A2**
(43) Date of publication of application: **05.10.2005**
(21) Application number: 05005894.0
(22) Date of filing: 17.03.2005
(51) Int. Cl.: F04B 27/18

(54) **Control valve for variable displacement compressor**

(30) Priority: 30.03.2004 JP 2004097964
(71) Applicant: TGK COMPANY, LTD., Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(57) **Abstract**

In a diaphragm type control valve for a variable displacement compressor a core 23, a plunger 22, and a spring 24 of a solenoid are accommodated in a bottomed sleeve 21. A diaphragm 25 is welded to an open end of the bottomed sleeve 21 under a vacuum ambience to constitute an assembly with an evacuated interior. Suction pressure Ps is sensed as an absolute pressure with reference to the vacuum. The movable parts of the solenoid are housed in the vacuum container and are protected against the influence of metal dust contained in refrigerant circulating through a refrigeration cycle.

## Description

The invention relates to a control valve according to the preamble of claim 1 for a variable displacement compressor of an automotive air conditioner.

In a known variable displacement compressor used in a refrigeration cycle of an automotive air conditioner, the compressor being driven by the automobile engine, a wobble plate is disposed within the gastight crankcase. The wobble plate performs a wobbling motion, and drives reciprocating pistons in associated cylinders to draw-in, to compress and to discharge compressed refrigerant into a discharge chamber. The inclination angle of the wobble plate can be varied by changing the pressure in the crankcase, such that the strokes of the pistons are changed for changing the refrigerant discharge amount. The control valve introduces part of refrigerant at discharge pressure Pd into the crankcase, and controls the pressure Pc. The amount of introduced refrigerant is controlled according to the suction pressure Ps in a suction chamber of the compressor, i.e. the control valve senses the suction pressure Ps, and controls the flow rate into the crankcase such that the suction pressure Ps is kept at a constant level. The control valve has a suction pressure pressure-sensing section, and a valve section opening and closing a passage between the discharge chamber and the crankcase depending on the sensed suction pressure Ps. One type of a control valve for a variable displacement compressor, the value of the suction pressure Ps of which can be freely externally set at the start of the variable displacement operation, comprises a solenoid for varying the set point of the pressure-sensing section by external electric current. The pressure-sensing section generally may comprise a bellows or a diaphragm.

In a diaphragm type control valve the relative pressure between the suction pressure Ps and atmospheric pressure is sensed. Changes in the atmospheric pressure due to different altitudes above sea level generate control errors. For this reason a control valve has been proposed which senses the suction pressure as an absolute pressure to eliminate altitude influences (Japanese Unexamined Patent Publication (Kokai) No. 2004-36596). This control valve contains a vacuum chamber sealed by the diaphragm, a valve section, and the solenoid for setting the value of the suction pressure Ps for the diaphragm, in the mentioned order.

However, in this control valve the solenoid, particularly movable parts of the solenoid, might become adversely affected by the refrigerant flow through the valve section and the solenoid from metal dust contained in the refrigerant circulating through the refrigeration cycle.

It is an object of the invention to protect the movable parts of a solenoid of a diaphragm type control valve for a variable displacement compressor against adverse effects of metal dust contained in the refrigerant.

This object is achieved by the features of claim 1.

As the bottomed sleeve is gastightly sealed by the diaphragm such that the bottomed sleeve serves as a vacuum container, and since the movable parts of the solenoid are disposed in the vacuum container, the diaphragm senses the suction pressure with reference to a vacuum, i.e. as an absolute pressure free from influences of variations in the atmospheric pressure, and the movable parts of the solenoid are protected against any metal dust contained in the refrigerant. In the control valve an assembly is separately formed by sealing the bottomed sleeve containing the movable parts of the solenoid with the diaphragm such that the assembly has a vacuum inside. The assembly is fixed to the body of the valve section, with the solenoid coil arranged therearound. Therefore, the control valve has an advantageous simple construction.

Embodiments of the invention are explained with the help of the drawings. In the drawings are:
- Fig. 1: a longitudinal section of a first embodiment of a control valve for a variable displacement compressor,
- Fig. 2: an enlarged fragmentary section in Fig. 1,
- Fig. 3: an enlarged fragmentary section in Fig. 1,
- Fig. 4: a longitudinal section of a second embodiment of the control valve, and
- Fig. 5: an enlarged exploded section view of the second embodiment.

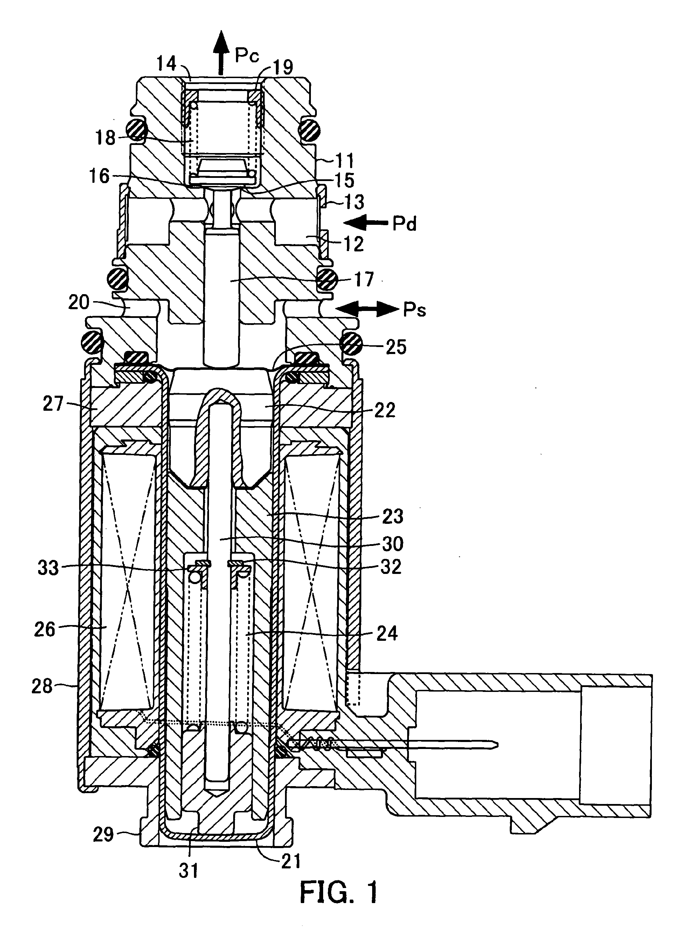

A control valve (Fig. 1) for a variable displacement compressor has a valve section including a body 11 with a side port 12 (discharge pressure Pd) communicating with a discharge chamber of the variable displacement compressor when the control valve is mounted in the compressor. The side port 12 is covered by a strainer 13 and communicates via a refrigerant passage inside of the body 11 with a central top port 14 communicating with a crankcase (controlled pressure Pc).

A valve seat 15 is formed in the refrigerant passage integrally with the body 11. At the pressure Pc side of the valve seat 15 an axially movable valve element 16 is disposed. The valve element 16 is integral with a shaft 17 which extends downward through a valve hole of the valve seat 15 and which is axially movably guided in a bore of the body 11. The discharge pressure Pd is introduced into an annular space surrounding a small-diameter connecting portion between the valve element 16 and the shaft 17. The outer diameter of the shaft 17 and the inner diameter of the valve hole of the valve seat 15 are equal such that the pressure-receiving areas of the valve element 16 and of the shaft 17 are equal. Any force of the discharge pressure Pd on the valve element 16 in upward direction is balanced by the force of the discharge pressure Pd acting on the shaft 17 in the downward direction, such that the action of the valve section will not be adversely affected by the relatively high discharge pressure Pd.

The valve element 16 is urged by a spring 18 in valve-closing direction. The load of the spring 18 is adjusted by an adjustment screw 19 screwed into the port 14. A lower side port 20 of the body 11 communicates with the suction chamber of the variable displacement compressor (suction pressure Ps).

A pressure-sensing section and a solenoid are arranged below the body 11. More specifically, on the lower end of the body 11, there is disposed an assembly formed by accommodating a plunger 22, a core 23, and a spring 24, as component elements of the solenoid, in a bottomed sleeve 21 forming a vacuum container. The opening of the bottomed sleeve 21 is sealed by a metal diaphragm 25. Outside of the bottomed sleeve 21, there are arranged a coil 26, a ring 27, a case 28, and a handle 29, all made of magnetic substances, for constituting a yoke for establishing a magnetic circuit.

In the bottomed sleeve 21, the core 23 is rigidly press-fitted in position, and the plunger 22 is axially movably disposed on the side of the core 23 facing toward the valve section. The plunger 22 is rigidly press-fitted on one end of a shaft 30 which extends axially movable through the centre of the core 23. The other end of the shaft 30 is supported by a bearing 31 which is slidably disposed in the core 23. A stop ring 32 for a spring-receiving member 33 is fitted on an intermediate portion of the shaft 30. A spring 24 is interposed between the spring-receiving member 33 and the bearing 31. The plunger 22 is urged by the spring 24 via the shaft 30 in a direction away from the core 23. The load of the spring 24 can be changed by externally adjusting the axial position of the bearing 31. More specifically, for the final adjustment after assembly of the control valve the bottom of the bottomed sleeve 21 is pushed from outside to be deformed inward, whereby the axial position of the bearing 31 abutting at the bottom is changed to adjust the load of the spring 24. Thus, the set point of the control valve is adjusted.

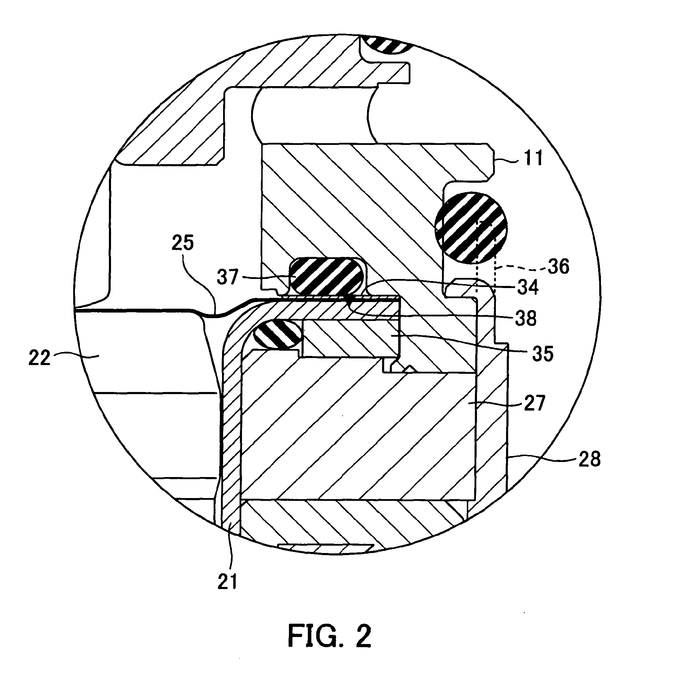

The bottomed sleeve 21 is sealed by welding the diaphragm 25 to a flange portion formed on the open end of the bottomed sleeve 21. For example, (Fig. 2), the diaphragm 25 first is placed on the flange portion and then is circumferentially welded to the flange portion along the entire perimeter by an annular patch 34 by laser welding, resistance welding, or the like, under vacuum atmosphere, such that the gastight assembly is formed with the interior maintained under vacuum.

This assembly is fixed to the body 11 via a reinforcing ring 35 by positioning the flange portion of the bottomed sleeve 21 in a recess formed in the lower end of the body 11 and by caulking the peripheral wall of the recess. Then, the case 28 accommodating the coil 26 is fixed to the body 11 by caulking an upper end 36 of the case 28.

When mounting the assembly to the body 11, an O-ring 37 is interposed between the patch 34 and the body 11 so as to seal between a chamber receiving the suction pressure Ps and the atmosphere, such that the centre of the solid part of the 0-ring 37 is positioned at a location radially inward of a weld line 38. Thus, stress generated by displacements of the diaphragm 25 is hindered from reaching the weld line 38 which may be fragile due to a material change caused by the welding process.

The bottomed sleeve 21 is formed by deep-drawing from stainless steel material, e.g. of the specification SUS304. The bottomed sleeve 21 has to be formed of a non-magnetic material to prevent that the bottomed sleeve 21 attracts the plunger 22 during energization of the solenoid, because this would understandably increase the sliding resistance of the plunger 22. However, steel of the specification SUS304 has the property that it acquires magnetism due to a partial change in its metallic crystal structure when subjected to strong cold working. In such a case, the bottomed sleeve 21 is made non-magnetic again by an annealing step.

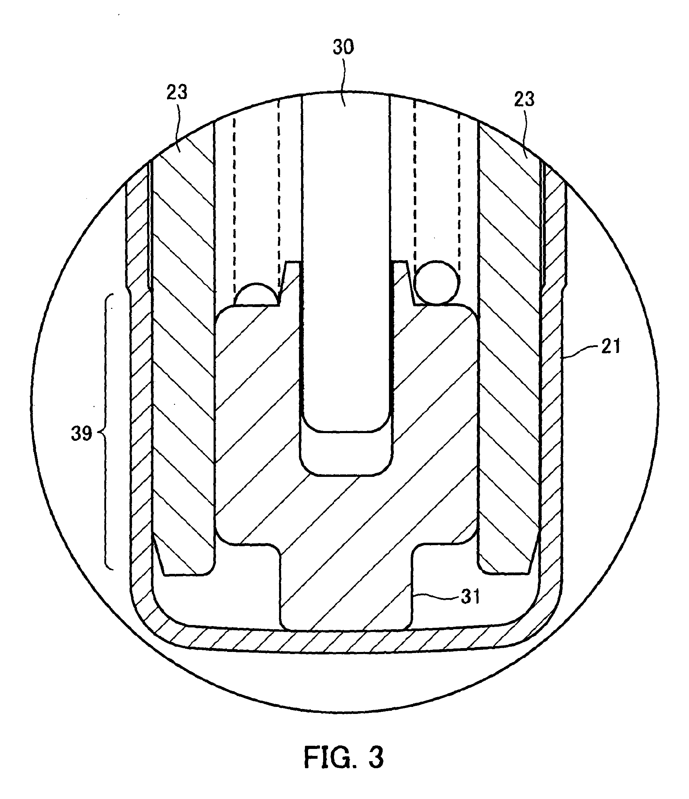

The bottomed sleeve 21 also includes a portion which is desirably magnetic in view of the magnetic circuit. The portion is located in the area of the handle 29 which establishes a magnetic connection between the core 23 and the case 28. For this reason, a part of the bottom-side portion of the bottomed sleeve 21 which is formed by deep drawing first with a straight extension, is further drawn as shown in detail in Fig. 3. More specifically, this part of the bottom-side portion of the bottomed sleeve 21 is subjected to strong cold working while its diameter is reduced such that it becomes magnetic to increase the magnetic permeability. This drawn part of the bottom-side portion of the bottomed sleeve 21 has its diameter reduced to form a press-fitting portion 39 used for rigidly press-fitting the core 23 in the bottomed sleeve 21. In this press-fitting portion 39, the amount of press-fitting of the core 23 or its insertion depth, respectively, is adjusted to adjust the magnitude or width of a magnetic gap as defined between the core 23 and the plunger 22.

When the bottomed sleeve 21 is made of a stainless steel, the diaphragm 25 should also be made of a stainless steel, e.g. of a steel material for springs, e.g. of the specification SUS304CSP, in view of welding. Of course, the materials of the bottomed sleeve 21 and the diaphragm 25 are not limited to the mentioned stainless steel materials. It is also possible to use copper for the bottomed sleeve 21, and beryllium copper for the diaphragm 25.

The ring 27, the case 28, and the handle 29 are formed of magnetic materials to serve as the yoke of the magnetic circuit of the solenoid. Magnetic lines of force generated by the coil 26 pass through the magnetic circuit formed by the case 28, the ring 27, the plunger 22, the core 23, and the handle 29.

In Fig. 1 the solenoid is de-energized and the suction pressure Ps is high, i.e. the air conditioner is not operating. The high suction pressure Ps displaces the diaphragm 25 downward against the load of the spring 24 to bring the plunger 22 into contact with the core 23. The valve element 16 held in contact with the diaphragm 25 via the shaft 17 is seated on the valve seat 15 by the spring 18. The valve section is in the fully-closed state.

When the automotive air conditioner is started now (the compressor is driven by the engine) the variable displacement compressor is operated with maximum displacement.

The compressor operating with maximum displacement lowers the suction pressure Ps sufficiently low to move the diaphragm 25, sensing the suction pressure Ps, upward. The plunger 22 moves away from the core 23 when still abutting at the diaphragm 25. If control current supplied to the solenoid coil 26 is set to a value of a cooling capacity corresponding to a temperature set for the air conditioning, the plunger 22 stops in a position where the suction pressure Ps, the loads of the springs 18 and 24, and the attractive force of the solenoid are balanced. The valve element 16 held in contact with the diaphragm 25 via the shaft 17 is pushed upward by the diaphragm 25 and leaves the valve seat 15 until it is set to a predetermined valve lift. Refrigerant at discharge pressure Pd is introduced into the crankcase at a flow rate according to the valve lift. The compressor operates with a displacement corresponding to the value of the control current.

As long as the control current remains constant, the diaphragm 25 senses the suction pressure Ps as an absolute pressure for controlling the valve lift.

When the refrigeration load increases, the suction pressure Ps will become higher, and the diaphragm 25 is displaced downward, so that the valve element 16 decreases the valve lift, causing the compressor to operate in a direction of increasing the displacement. When the refrigeration load decreases, the suction pressure Ps will become lower and the diaphragm 25 is displaced upward to increase the valve lift, causing the compressor to operate in a direction of decreasing the displacement. The control valve controls the displacement of the compressor such that the suction pressure Ps becomes equal to a value set by the solenoid.

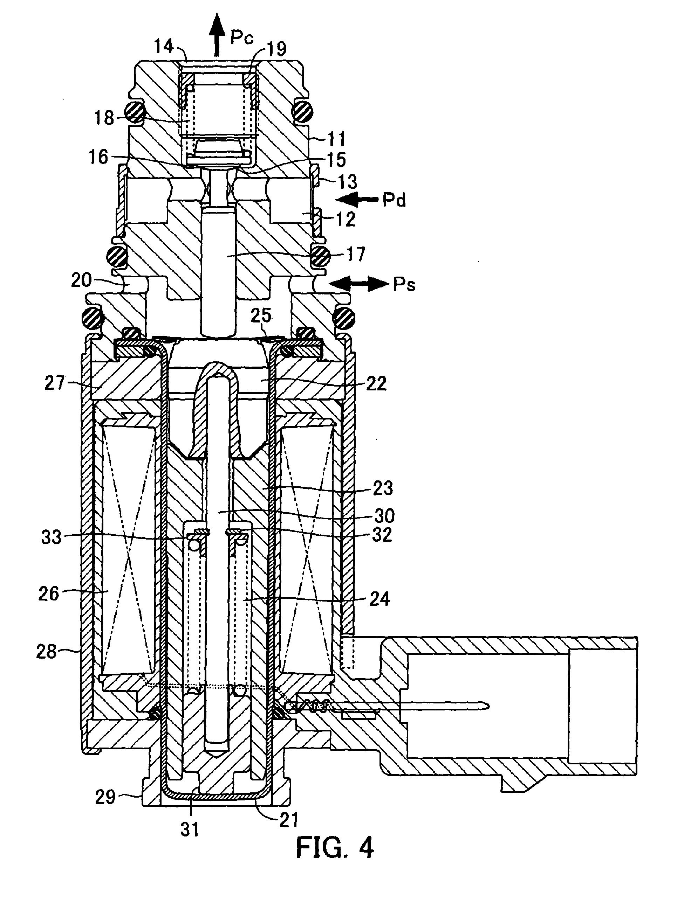

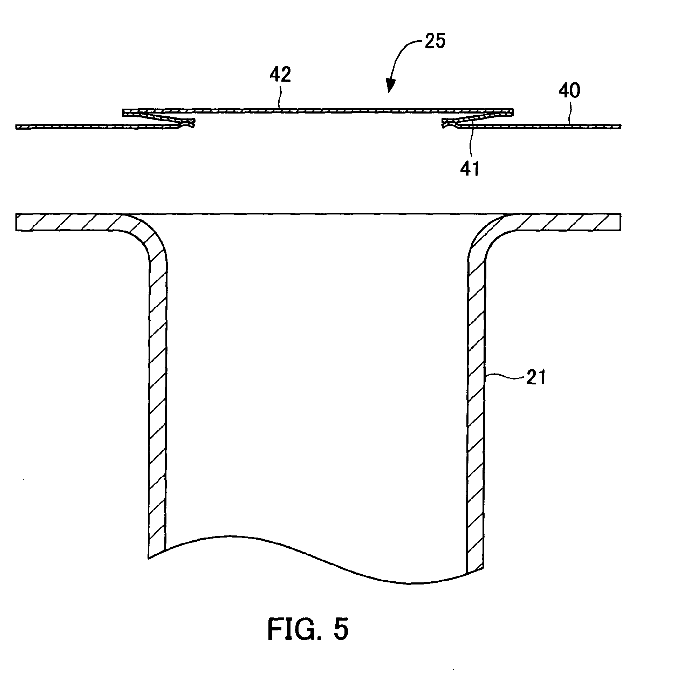

In the control valve of the second embodiment in Figs 4, 5 the shape of the diaphragm 25 is modified. As shown in Fig. 5, present diaphragm 25 comprises three component parts. A base part 40 of the largest diameter with a central hole is welded to the flange portion of the bottomed sleeve 21. A funnel-shaped intermediate connecting part 41 is disposed on the base part 40. A disk 42 is disposed on the intermediate connecting part 41 to cover the upper opening of the port 41. The base part 40, the intermediate connecting part 41, and the disk 42 are formed e.g. of beryllium copper. Inner peripheral portions of the base part 40 and the intermediate connecting part 41 are welded to each other along the entire perimeters e.g. by forming a protuberance along the inner peripheral edge of the base part 40 and projection-welding the inner peripheral portions of the two. Other peripheral portions of the intermediate connecting part 41 and the disk 42 are welded to each other along the entire perimeters e.g. by laser-welding. The bottomed sleeve 21 is formed of the same copper or copper beryllium material as the diaphragm 25. The base part 40 of the diaphragm 25 is welded to the flange portion of the bottomed sleeve 21 along the entire perimeter thereof under vacuum atmosphere e.g. by laser-welding.

This diaphragm 25 can perform with a larger displacement stroke than the diaphragm of the first embodiment, in order to expand the control range of the valve section.

## Claims

1. A control valve for a variable displacement compressor for controlling the pressure (Pc) in a crankcase of the compressor by sensing the suction pressure (Ps) of the compressor by a diaphragm (25),
**characterised in that** a core (23) of a solenoid of the control valve and a plunger (22) which is urged in a direction away from the core (23) both are accommodated in a bottomed sleeve (21), and that the open end of the bottomed sleeve (21) is sealed by the diaphragm (25) such that the evacuated interior of the bottomed sleeve (21) is kept gastight.

2. Control valve according to claim 1, **characterised in that** the core (23) is press-fitted into the bottomed sleeve (21), and that a magnetic gap defined between the core (23) and the plunger (22) is adjusted by the amount of the depth of the press-fitting of the core (23) in the bottomed sleeve (21).

3. Control valve according to claim 2, **characterised in that** the bottomed sleeve (21) has a bottom-side portion used as a part for press-fitting the core (23), and that the press-fit is achieved by reducing the diameter of the bottom-side portion.

4. Control valve according to claim 1, **characterised by** a shaft (30) axially extending through the core (23), one end of the shaft (30) being fixed to the plunger (22), by a bearing (31) disposed in contact with the bottom of the bottomed sleeve (21) for supporting the other end of the shaft (30), and by a spring (24) between the shaft (30) and the bearing (31) for urging the plunger (22) away from the core (23), the axial position of the bearing (31) supporting one end of the spring (24) being adjustable to adjust the load of the spring (24) by deforming the bottom of the bottomed sleeve (21) from outside such that the bottom is dented.

5. Control valve according to claim 1, **characterised in that** a flange portion is formed on the open end of bottomed sleeve (21), that the diaphragm (25) is circumferentially and sealingly welded to the flange portion along an entire perimeter, and that a sealing member (37) sealing between a space from which the diaphragm (25) receives the suction pressure (Ps) and the atmosphere is disposed radially inward of the welding seam (34, 38) position of the diaphragm (25).

6. Control valve according to claim 1, **characterised in that** the diaphragm (25) comprises a base part (40) having a central hole, that the base part (40) is welded to a flange portion on the open end of the bottomed sleeve (21), that a funnel-shaped intermediate connecting part (41) is welded at an inner periphery to an inner periphery of the base part (40), and that an outer periphery of a disk (42) is welded to an outer periphery of the intermediate connecting part (41).
